# EUROPEAN PATENT APPLICATION

(11) **EP 1 213 113 A1**
(43) Date of publication of application: **12.06.2002**
(21) Application number: 00310844.6
(22) Date of filing: 06.12.2000
(51) Int. Cl.: B29B 17/00, C08J 9/38

(54) **Process for reducing the particle size of porous organic polymers and products produced therefrom**

(71) Applicant: ENSCI, INC., Pismo Beach, CA 93448 (US); Clough, Thomas J., Grover Beach, CA 93433 (US)
(72) Inventor: Clough, Thomas J., Grover Beach, CA 93433 (US)
(74) Representative: Colmer, Stephen Gary

(57) **Abstract**

The present invention relates to a process for reducing the mean particle size of resilient porous organic polymer particles having open cell pores, which resist particle size reduction due to the compressibility and resiliency of the organic polymer. Further, the present invention relates to novel products produced by the process for reducing the mean particle size and to particles of reduced mean particle size which have one or more functional agents contained in the pores thereof.

## Description

### Technical Field

The present invention relates to a process for reducing the mean particle size of resilient porous organic polymer particles having open cell pores, which resist particle size reduction due to the compressibility and resiliency of the organic polymer. Further, the present invention relates to novel products produced by the process for reducing the mean particle size and to particles of reduced mean particle size which have one or more functional agents contained in the pores thereof.

### Background Art

Resilient porous organic polymers resist permanent deformation and have been found to be difficult to process, if at all, for size reduction in conventional grinding processes. Conventional grinding processes are typically used to grind and produce particle size reduction for solid type particles which have little or no compressibility and which can vary in particle hardness. Typical grinding processes such as universal mills, slurry mills, and fluid energy mills, cone mills and hammer mills are generally effective for such solid type particles, particularly brittle type particles. One of the problems with the use of conventional grinding mills for size reduction of resilient porous organic polymers is that the particles compress under the applied forces, i.e., the particles are compressible and regain substantially the same geometry when the force is removed. Unlike solid particles, particularly brittle particles, the conventional grinding mill approaches used for dry solid particles produces substantially less or even no size reduction of resilient porous polymers in the dry powder form. Further, attrition type grinding mills have had little overall effectiveness when the organic porous polymers were incorporated into a liquid slurry.
In many applications that use porous organic polymers as additives such as the use of additives in lead acid batteries, it is preferred to have a non-spherical geometry such as an elongated geometry and/or a geometry that has a length to diameter, which is greater than one, in order to provide improved overall performance of the additive. It is therefore desirable to produce porous organic particles of reduced size by processes which produce a non-spherical geometry and a higher surface area.

Thus, for the many applications in which porous organic polymers are used, particularly there use as additives, wherein a reduced particle size and/or particle size distribution offers performance advantages, there is a need for a process which is effective for reducing the particle size of resilient porous organic particles at reasonable process conditions and processing times, particularly processing conditions at atmospheric pressure and ambient temperatures at preferably commercial scale processing times.

### Summary of the Invention

A new process for reducing the mean particle size of resilient porous organic polymer particles having open cell pores has been discovered. In brief, the process includes the steps of forming an aqueous particle slurry comprising a major amount (for example, greater than 50% by wt.) of water, both internal and external to the particles and a minor amount of particles to form a slurry and subjecting the aqueous slurry to a cutting action by contact with a plurality of cutting surfaces to reduce the average particle size of the particles and recovering particles of reduced mean particle size.

New porous organic polymers of reduced particle size produced by the cutting process have also been discovered. In brief, the new products produced by the process have a non-spherical geometry, typically elongated and/or a length to diameter to width aspect ratio greater than one and a high surface area. The products find use, for example, as additives in lead acid battery elements and in combination with functional agents such as additive agents in polymer coatings, films and composites and bioactive agents in slurry and fixed bed processes and environmental processes.

A new battery element, which improves utilization efficiency of the active material in a lead acid battery has been discovered. In brief, the battery elements include the addition of macroporous containing organic particle additives produced by the process of this invention to the active material in the positive or negative plates of a lead acid battery to improve overall utilization efficiency and the utilization of sulfuric acid electrolyte during discharge of the battery.

### Best mode For Carrying Out The Invention

In one broad aspect, the present process reduces the mean particle size of resilient porous organic polymer particles having open cell pores comprising the steps of forming an aqueous particle slurry comprising a major amount of water and a minor amount of said organic polymer particles wherein said water is present in a least a part of the internal pores of the particles to provide a degree of resistance to particle compressibility and in addition, external to said particles to form a slurry. The slurry is subjected to a cutting action by contact with a plurality of cutting surfaces to reduce the mean particle size of the particles. The particles of reduced mean particle size are then recovered typically using conventional separation processes.

The porous organic polymer particles typically have open cell pores, i.e., pores that are interconnected and open to the outer surface, and are resilient, i.e., the particles can be compressed and resist permanent deformation under low or even moderate forces of compression. Typically, the porous organic particles have at least about 40% porosity, more typically, at least about 60% porosity, i.e., the volume of the pores represent such percentage of the total volume of the particles typically from the standpoint of the average percent porosity of the particles. The average pore size distribution of the particles can vary over a wide range, typically varying from about 0.02 microns to about 15 microns, more typically, from about 0.03 microns to about 12 microns and still more typically from about 0.75 microns to about 10 microns. The organic porous particles prior to size reduction typically have an average particle-diameter of greater than about 2,000 microns, typically greater than about 1,000 microns, although, particles having an average diameter greater than 400 microns can be processed within the process of this invention. Particles produced by the process of this invention have a reduced average particle size typically less than about 150 microns, more typically less than about 100 microns and still more typically less than about 75 microns or even less than about 50 microns.

The chemical composition of the porous organic polymers can vary widely and include polyolefins such as polypropylene and high and low-density polyethylene, nylons, ethylene vinyl acetate, polycarbonate, acrylonitrile polymerized with styrene and/or butadiene and the like. One of the substantial advantages of the process of this invention is that porous organic polymers, which are hydrophobic, i.e., not significantly water wet, can be processed according to the process of this invention to reduce the average mean particle size of the porous particles.

In the process of this invention, the porous organic polymer particles are combined with a major amount of water to form an aqueous particle slurry. As set forth above, the porous organic polymers have open cell porosity, which allows water to be present in at least a part of the internal pores of said particles. It has been found that the presence of such water provides resistance to particle compressibility and enhances the effect of a cutting action to reduce the mean particle size of the porous particles. Typically, water will occupy at least about 10% more preferably at least about 50% of the pore volume of the particles or even greater than about 85% of the volume of the pores within said particles. It is preferred to have water present in the internal pores at a percent of the volume of the internal pores, which enhance the resistance to particle compressibility and in addition, which aids in the formation of an aqueous particle slurry, i.e., produces a higher density particle.

The aqueous particle slurry comprises a major amount of water said major amount of water being that water which is part of the internal pores of the particles and also that water, which is external to said particles to form a slurry. Typically, the combined internal and external water represents at least about 80% of the total weight of the slurry, i.e., water and particles, i.e., the weight of particles on a dry basis, typically greater than about 85% and more typically and preferred greater than about 90wt% basis the total weight of the slurry.
The aqueous particle slurry can be formed by combining porous organic polymers, typically in a dry form, with water under mixing conditions. Depending on the pore volume of the organic porous polymers, the density of the porous polymers can be significantly less than water such as less than 0.5gm per cc. In order to enhance the presence of water in the internal pores of the porous particles, a vacuum can be applied, with mixing, to aid in wetting out of the porous polymers. In addition or in the alternative, and particularly when the organic polymers have hydrophobic character, an internal surface modifier component, for example a small amount of a surfactant, such as a non-ionic surfactant, can be added to the aqueous slurry to enhance wetting out of the internal surfaces of the pores of the particles and the presence of water within the internal pores. The use of surfactants such as hydrocarbon or fluorosurfactants to assist in such wetting of polymer surfaces are well within the skill of the art.

Further, other agents or components that can modify the surface of the pores can also be added to the slurry, such as for binding or association of one or more functional agents to the product. It has been found that one or more component can be distributed on the internal surfaces of the pores, thereby enhancing the properties of the functional agent. The aqueous particle slurry is subjected to a cutting action by contact with a plurality of cutting surfaces to reduce the mean particle size of the particles. As set forth above, the porous organic particles are resilient. The term resilient refers to particle compressibility when subjected to an external force or pressure at the process conditions of temperature and pressure when the particles are subjected to the cutting action at the cutting surface. Thus, for example, the temperature of the particles may increase at the cutting surface as heat is generated during the cutting action. The term resilient refers to the condition of the particles under the conditions of temperature and pressure when the particles are in contact with the cutting surface. In one embodiment of the process of this invention the liquid particle slurry is fed to the center of a high speed rotating impeller. Centrifugal forces then move the particles outward to cutting surfaces where the particles are in contact with the cutting edges of a stationary cutting head. The cutting action reduces the average mean particle size of the porous organic particles. It is preferred that the cutting surfaces be stationary with the slurry being fed to a rotating non-cutting slurry distribution means, such as a rotating impeller. The term rotating cutting action includes those processes wherein the cutting surfaces are stationary.

One of the substantial advantages of the process of this invention is that difficult to process resilient porous organic polymers can be processed and achieve size reduction typically at relatively short residence times, i.e., a porous organic polymer particle is in contact with the cutting surfaces typically less than 15 seconds, more typically, less than 5 seconds and even more typically less than 1 second. One of the further advantages of the process of this invention are the ability to produce non-spherical particles of reduced average mean particle size. As set forth above, many additive and functional agent type applications have a preference for a non-spherical geometry i.e., one or more of the dimensions of length, width and thickness, i.e., height are different and high surface area. The process of this invention can produce non-spherical porous polymer particles of reduced average mean size having varying length to width to height ratios, i.e., the particles can be elongated and non-spherical.

The porous organic polymer particles after size reduction can be recovered by conventional processes. Typical examples of such recovery processes are filtration, such as rotary and vacuum filters, screens such as vibrating screens and centrifuges. The choice of the recovery process can be varied depending on the end use application of the recovered particles. For example, a typical additive for use in lead acid batteries may have an acceptable moisture content of from about 30 to 40 wt%. In other end use applications substantial or complete dewatering of the internal pores may be required. The above recovery processes typically remove about 90%, typically greater than 95% of the external water that forms the aqueous particle slurry and can produce a dry free flowing powder. The percentage of the internal water removed will vary according to the end use application. It is contemplated within the scope of this invention that there can be substantial dewatering of the internal pores including dewatering of from about 85 to about 100%, more typically from about 90 to 100% of the internal water, i.e., less than about 10wt% moisture. As set forth above, the degree of the dewatering of the internal pores relates to the final end use application of the particle products.

As is recognized by those of skill in the art, a number of the above recovery processes have the capability to recover particles of different size classifications. Thus for example, the product might be recovered at a certain top size, for example less than about 150 microns or less than about 100 microns such as less than about 50 microns with the larger materials not within that size classifications being recovered and further processed to achieve a given size classification. The larger particles can be recycled and combined with the incoming slurry for purposes of efficiency and cost effective processing. However, particle size distribution and cut off upper and lower limits, in general, is a function of the end use applications and the specifications set by those applications for particle size distribution.

As set forth above, the porous polymers can be reloaded with a functional agent such as additives including meltable solids and dispersions by mixing the organic porous polymers of reduced particle size with the agent. The porous structure typically acts like tiny sponges with the ability to absorb such liquids typically up to several times there own weight. It is believed that the pores of the porous polymers are filled by capillary absorption. After the agent is added to the porous polymer, the system generally remains dry and free-flowing. In order to maximize the adsorption of the liquid additive, it is preferred that the internal water be substantially removed from the porous polymer prior to addition of the liquid additive. The loaded porous polymers can then be used in many applications and combined with other polymers to provide an additive concentrate as a free-flowing powder. Typical low melting additives, which can be incorporated into the porous polymers are anti-static agents, slip and anti-block agents, mold release agents, permanent lubricants, anti-fog agents, antioxidants, light stabilizers, nucleating agents, peroxides, biocides, fragrances, insecticides, pharmaceuticals, agricultural agents, pheromones and the like. As is known by those of skill in the art, the agents themselves may be liquid or if solid, can be added to a liquid carrier such as an organic or water based carrier in which the additive is dissolved, emulsified and/or dispersed in order for the agent and carrier to be absorbed in the pores of the polymer. The pore diameter of the polymer is generally selected in order to achieve a rapid uptake of the liquid additive material and which also produces, in general, a dry and free-flowing powder. Typically, loading capacities greater than 50% or even up to 70% or more can be loaded with the liquid additive. Further, additional slow release agents, such as gels, can be added to, for example, the above agents.

The external and internal surfaces can also be modified during manufacture to produce a hydrophilic character and/or a combination of hydrophilic and hydrophobic character and surface properties providing for complex functionality.

The porous polymers can also be used for loading with agents for use in a variety of end-use applications. For example the porous polymers can be reloaded with one or more bioactive species for use in environmental and/or chemical processing type applications, including bioremediation, bioaugmentation, waste water treatment and other chemical processes. The porous polymers have the unique property of having surface modification as required for a given application and for ease of separation from aqueous slurries in, for example, slurry processing.

Porous polymers can be added to enhance bioremediation systems or bioprocesses. Depending on the application, the porous polymers may or may not be preloaded with bacteria for specific biological activities. Potential biological processes and/or bioremediation systems for the use of porous polymers are set forth below. Porous polymers can be particularly effective in the creation of what is known as in situ reactive barriers. Reactive barriers are engineered systems emplaced in the direct flow of groundwater to degrade or chemically transform contaminants. These barriers are typically permeable so that the groundwater can continue on its natural path after the contaminants have been removed. The inherently small size of the porous polymer particles is a significant advantage for in situ applications since the barriers are often emplaced as a slurry wall either through excavation and backfilling or through direct injections of material into the aquifer itself. A porous polymer slurry can be placed in the aquifer through wells, a significant advantage for deeper contaminated sites. In addition a surfactant with the porous polymer slurry can be pumped as an aqueous slurry. Typical contaminants are hydrocarbons, chlorinated organics and heavy metals. Each type of contaminant has unique needs that can be effectively addressed by the use of a porous polymer barrier. The porous polymers can be used as is or could be pre-loaded with bacteria of known contaminant transforming capability to seed the aquifer, resulting in a locally high concentration of bacteria with the proper metabolic capabilities.

Further, the porous polymers can be used as hydrocarbon barriers. Many hydrocarbons are known to be very biodegradable in the presence of oxygen (e.g. BTEX compounds -benzene, toluene, ethylbenzenes, and xylene) i.e. natural biodegradation of these compounds in aquifers. There is another compound that can lend itself to reactive barriers. This compound is methyl tertiary butyl ether (MTBE -a relatively recent gasoline additive) MTBE is a highly mobile organic contaminant that is very resistant to biodegradation. A few organisms have been isolated that have degrading capability. Pre-loading the porous polymers with an MTBE degrading organism and employing it as a barrier for MTBE in the groundwater can be a viable treatment technology.

Chlorinated solvents (e.g.perchloroethylene and trichloroethlyene) are recalcitrant compounds that can be biodegraded in the subsurface. These compounds are typically degraded in the absence of oxygen by natural bacteria through the addition of a carbon source such as lactate. The bacteria generate reducing power from organic substrates such as lactate.

For chlorinated solvent treatment, the use of porous polymers can enhance the remediation process in a number of ways. First, the porous polymers can be used as a carrier for bacteria that have been adapted for high activity against chlorinated solvents. Second, the chlorinated solvents like hydrocarbons are somewhat hydrophobic and can preferentially partition onto the porous polymers so that the biological removal processes would also be enhanced by the abiotic sorption of chlorinated solvents to the polymer. Finally, as set forth above, chlorinated solvent biodegradation typically requires the use of an organic substrate for reducing power. These organic substrates (typically an organic acid such as lactate) can be added to the porous polymers to yield a time-release effect. The substrate can be slowly released in very close proximity to the chlorinated solvents concentrated at the porous polymer surface.

It is well known that the mobility of a variety of heavy metals can be significantly reduced through biological activities. These activities fall into two categories that include direct metal reduction and metal sulfide precipitation. With direct microbial reduction, heavy metals including chromium, the bacteria in the presence of organic substrates, reduce uranium, technetium, and cobalt. When reduced, these metals form insoluble precipitates that can remain trapped within the porous polymer barrier. Metal sulfide precipitation relies on the use of sulfate reducing bacteria to produce hydrogen sulfide. The sulfide ion reacts with many heavy metals (including lead, mercury, copper, cadmium, zinc, and iron) to form insoluble precipitates. The heavy metal barrier can have many of the same characteristics of the chlorinated solvent barriers. Bacteria (sulfate or metal reducing) can be added to the porous polymer matrix to increase rates of metal transformation. In addition, organic substrates typically are also necessary and can be added to the porous polymers for a slow release process.

Animal waste lagoons are difficult to control regarding emissions of odorous gasses that result from anaerobic microbial activity in the waste lagoon. These odorous gasses can typically be degraded by bacteria under aerobic conditions. Currently, attempts have been made to cover the lagoons, collect the noxious gasses and treat them in a biofilter containing aerobic bacteria. Covering the lagoons with a gas impermeable barrier is costly and operating a biofilter can be difficult. A significant advance is the use of floating porous polymers of this invention to increase the surface area of the interface between the water of the lagoon and the atmosphere. The porous polymers can provide a high surface area interface between the anaerobic lagoon and the atmosphere. The porous polymers can be pre-loaded with bacteria or can be colonized by naturally occurring bacteria from the lagoon itself. The porous polymers can form a moist floating cover for the lagoon and this cover has a high surface area available for biological activity. In addition the porous polymers cover can be open to the atmosphere to provide high oxygen exchange rates necessary to consume the odorous gases.

Certain industrial wastewater treatment facilities can use powdered activated carbon (PAC) as a process-enhancing additive to activated sludge treatment systems. The PAC is added to the system for two primary reasons: 1) the solid support provides a surface for attachment of bacteria thus promoting improved biomass retention and 2) the PAC provides an adsorption mechanism for the removal of hazardous compounds. However the PAC sinks, is collected and makeup PAC added. The porous polymers can act in much the same manner as the PAC. However, the low density of the porous polymers, its dispersal properties and its ability to be easily recovered such as by aeration/flotation, screens and hydroclones provides substantial advantages to waste water treatment processes. The porous polymers can be loaded with bacterial cultures acclimated to particular hazardous compounds to facilitate a high activity against specific hazardous compounds.

Bioactive species such as bacteria and other microorganisms associated with the porous particles, i.e., bioparticles can be used in a variety of applications. These include the biotreatment of aqueous waste streams, the biofiltration of gases, biosynthesis of fine and commodity chemicals, and other uses for which supported bacteria are suitable. The bioparticles have a catalytically efficient amount of microorganism associated with the particles.

In the fields of biotechnology and bioremediation, for example, bioactive species are often associated with a support to more effectively utilize the bioactive species. As used herein, the term "associated with" refers to adsorption, such as, physadsorption or chemadsorptin, ligand/receptor interaction, covalent bonding, hydrogen bonding, or ionic bonding of bioactive species to the porous particles.

Bioactive species include enzymes, organic catalysts, ribozymes, organomatallics, proteins, glycoproteins, peptides, polyamino acids, antibodies, nucleic acids, steroidal molecules, antibiotics, antimycotics, cytokines, carbohydrates, oleophobics and lipids, microrganisms having cells, such as,reptilian cells, amphibian cells, avian cells, insect cells, planktonic cells, cells from non-mammalian marine vertebrates and invertebrates, plant cells, microbial cells, protests, genetically engineered cells, and organelles, such as mitochondria.

Other examples of suitable microorganisms include bacteria from the following genera: Pseudomonas, Acinetobacter, Mycobacterium Corynebacterium, Arthrobacterium, Bacillius, Flavorbacterium, Nocardia, Achromobacterium, Alcaligenes, Vibrio, Azotobacter, Beijerinckia, Xanthomonas, Nitrosomonas, Nitrobacter, Methylosinus, Methylococcus, actinomycetes and Methylobacter. Additional microorganisms include members of the fungi, yeast, algae and protozoans.

The bioparticles can be used in the biotreatment of an aqueous waste stream or contaminated vapor as packing materials for bioreactors. Microorganisms with specialized metabolic capabilities can be used to colonize or adhere to the porous particles and thus serve as biocatalyst for the decontamination of waste streams. The porous bioparticles in a bioreactor increases the total surface area for high microbological cell densities which result in chemical degradation rates much higher than those of conventional waste treatment systems. The bioparticles can provide a means of controlling conditions, which favor microbial degradation of target compounds in for example a bioreactor. For example, parameters such as pH, oxygenation, nutrient concentrations, temperature, salinity, electron donors and co-metabolic substrates can be controlled. A bioreactor can be run under anaerobic and aerobic conditions. The waste stream can enter the base of the reactor such that the flow is upward or it can enter the top of the bioreactor and the waste stream can be directed downward. Thus, the bioreactor can function as an upflow or downflow fixed film system, or alternatively, the system can function as a fluidized bed reactor.

Nutrients and gases can be introduced into a system to support the growth of the microorganism and to thus catalyze the destruction of the contaminant. Waste streams which can be degraded by microorganisms according to the present invention include aromatics, hydrocarbons, halogenated organic compounds, phenolic compounds, alcohols, organosulfur compounds, organophosphorus compounds and mixtures thereof.

When used for treating aqueous waste streams or contaminated vapors the bioproducts of the present invention have a microbial colonization, which is preferably adapted to be resistant to process upsets such as acid upset, base upset, and nutrient limitation.

Additional bioactive agents include a thermophilic aerobic bacterial mixture comprising relative effective amounts of Pseudomonas stutzeri, Pseudomonas aeruginosa, Pseudomonas fluorescens, Pseudomonas mendocina and Alcaligenes denitrificans subspecies xylosoxydans.

Microorganisms, used in the practice of this invention, can be anaerobic and aerobic microorganisms selected to degrade target pollutants in ways well known in the art. The microorganisms can be employed as a pure strain or as a consortium of microorganisms. In preferred embodiments of the invention, aerobic microorganisms are employed. Although anaerobic microorganisms often degrade pollutant materials at a slower rate than aerobic microorganisms, an anaerobic process may be required to degrade a pollutant or an intermediate product to a material, which is susceptible to aerobic degradation to a non-toxic level or to a non-pollutant material. For example, ammonia can be remediated anaerobically first and then aerobically to the final products. Useful microorganisms may vary widely and may be naturally occurring microorganisms or may be genetically engineered microorganisms. The only requirement is that microorganisms are capable of metabolizing the target pollutant(s) to the required effluent levels over the required period of time. In the preferred embodiments of the invention, microorganisms are obtained from the pollutant-containing waste stream or from soil, which has been in contact with the waste stream.

In the operation of the process, the cell content of microorganisms (including extracellular proteins produced by microorganisms) is an amount, which is sufficient to reduce the pollutant content to the desired concentration level within the desired retention time. In the preferred embodiments of the invention, cell content of microorganisms is at least about 0.5% by weight based on the total weight as bioparticle and in the most preferred embodiments of the invention is from about 0.5% by weight to about 15% by weight based on the aforementioned basis. Among these particularly preferred embodiments most preferred are those embodiments in which the cell content of microorganisms is from about 0.5 to about 10% by weight based on the total weight of bioproducts.

As set forth above, the term "bioactive species" is used broadly, to include for example bacteria, fungi, spores derived therefrom and cells derived from multicellular organisms.

The bioactive species can be retained on the porous particle by a variety of physical and/or chemical means e.g. adsorption, entrapment, ionic linking, chemical bonding. The cells are in practice found to be associated at least within the pores of the porous particles.

Since there are essentially no closed pores in the particle and since the pores are generally fully interconnected by channels the biological cells are able to enter pores easily, so that a high loading of the particles can be achieved and entry of the species into the particles is easily achieved. Indeed, it is possible to introduce the species into the particles passively, e.g. by merely shaking the particles in a suspension of species cells.Instead of passive introduction of cells, the cells may be introduced into the porous particles by passing a cell suspension through a packed or expanded bed constituted by the porous particles.

As setforth above,the bioactive agents used in the present invention can be selected from the group comprising microbes, yeast cells, fungi, animal cells, plant cells, and mixtures thereof. In some instances the cells have been found to adsorb directly onto the surface of the porous particles, but in other cases it may be necessary to provide a chemical linkage to bind the cells. Such modification can be done during the size reduction of the porous particles or at a later stage. In such cases porous particles whose surfaces have been chemically modified have been found appropriate to provide chemical binding sites for the cells. Whatever method of attachment of the cells is employed, the use of the present porous particles have been found particularly appropriate as the cells can be associated within the interconnecting pores providing some or all of the advantages mentioned above.

A particular advantage found is that cells can adapt their morphology to create strong bonds to the polymeric particle. Thus there may be initially only a loose interaction with the particle. This initial interaction may be a process of physical adsorption at the polymer surface, i.e. without covalent bonding and without ionic bonding. Subsequently the cells may become chemically attached by adaption of the cells themselves.

Large pores in the porous particles will allow large catalytic species to be supported within these pores. Of particular interest is the use of living cells, e.g. bacteria, as catalysts: bacteria are large, with typical dimensions on the order of 1 micron or greater, and thus will not fit in smaller pores. While bacteria will form colonies on non-porous materials, the additional surface area, which is available within the pores foster larger bacterial populations. Further, bacteria in pores can be protected from transient upsets in the external medium because diffusion into the pores can be moderated. This is particularly true of upsets characterized by a sudden high concentration of some compound which may be toxic to the bacteria or by sudden changes in pH, ionic strength or toxic concentration of an organic or inorganic component of a waste stream. Bacteria supported on porous particles may be resistant to longer-term upsets, such as temporary oxygen or nutrient starvation caused, for example, by equipment failures.

A further preferred embodiment are the use of resilient porous organic polymers produced by the process of this invention is as additives in battery plates.

As set forth above, it is preferred that the porous substrate particles have sufficient macroporosity and percent apparent porosity for the utilization of the electrolyte sulfuric acid contained in the pores during discharge of the active material. Further, as set forth above, the preferred mean macropore diameter is from about 0.075 microns to about 10 microns and still more preferably from about 0.1 to about 5 microns. Particularly preferred porous particles that exhibit sufficient macroporosity are polyolefins still more preferably polypropylene.

Further, the porous particles as set forth above can be chemically resistant organic materials, including organic polymeric materials as set forth above. Preferred polymers are polyolefin polymers, polyvinyl polymers phenolformaldehyde, polymers, polyesters, polyvinylesters and mixtures thereof. Preferred polymers are polyolefins, preferably polypropylene, phenolformaldehyde polymers and polyvinylester, particularly modacrylic polymers.

Certain of these and other aspects to the present invention are set forth in the following examples.

### EXAMPLES 1 THROUGH 3

In the following examples, macroporous polypropylene powders having particle sizes of less than 400 microns, less than 1,500 microns and a particle size range of 200-1,000 microns were processed to reduce the overall particle size below 150 microns. The polypropylene powders were added to a vacuum mixer with deionized water containing one part per hundred parts of a non-ionic surfactant (Nalco8801). The water was added slowly with stirring while applying a vacuum typically 5-10 inches of mercury. The surfactant and vacuum aided in filling the internal pores of the polypropylene powders. It was estimated that the surfactant solution filled greater than 90% of the pore volume of the powders. The surfactant water solution was added until a powder aqueous slurry resulted as evidenced by the presence of external water to form the slurry. The powder aqueous slurrys were then added to a machine manufactured by Urschel Laboratories, Inc. The Comitrol models had a center opening in which to feed the particle slurry and a second water particle free stream and an impeller, which rotated at high speed forcing the slurry out to a stationary series of cutting surfaces arranged in a circular retaining device. It was estimated that for the 400-micron powder, the total solution, including both internal and external water was 95% with the remainder being 5% as dry powder. For the 1500-micron and 200-1000 microns powders, the total solution of the internal and external water was estimated to be 96% with the balance being 4% as dry powder.

### EXAMPLE 1

The 400-micron powder slurry was fed into a Comitrol processor model 1700 with an impeller speed of 11,925 RPM. The cutting head was identified as 212084-1°. 1 1/2 lbs. of dry material in slurry form was fed into the rotating impeller at a time of approximately 5-10 seconds. The temperature in was70°F and out was 75°F. A product was recovered in which 64% of the product passed through 120-mesh sieve. The recovered material was recycled through the model 1700 but with a cutting head identified as 216084-1°. 90% of the recovered product passed through 120-mesh. The temperature increased from 75°F in to 80°F out.

### EXAMPLE 2

Example 1 was repeated except that the powder was 200-1000 microns and the cutting head was 190804-2°. The recovered product passed 100% through a 45-mesh sieve. The product was then processed through the same Comitrol model 1700 but with a cutting head identified as 212084-1°. 54% of the product passed through a 120-mesh sieve. This recovered product was again passed through the model 1700 using a cutting head identified as 216084-1°. 86% of the product passed through a 120-mesh sieve. The temperature from the initial pass to the final pass went from 70°F to 79°F. The totalsingle particle contact time for the three passes was less than 30 seconds.

### EXAMPLE 3

Example 2 was repeated except the polypropylene powder was less than 1500 microns. After three passes using the same sequence of cutting head as in Example 3, 89% of the product passed through a 120-mesh sieve.

### EXAMPLE 4

The product of Example 3 was dried in a ribbon drier at a temperature of from 300 to 325°F for a time of from two and one-half to three hours. The moisture content of the final product was approximately 10wt%. The product was divided into two portions. One of which was contacted with a UV stabilizer used in polycarbonate polymers. The stabilizer filled the pores to approximately 90% of the available pore volume. The product is useful for compounding with polymer products to distribute the UV stabilizer in the product.

### EXAMPLE 5

The second product of Example 4 dried to 10wt% was contacted with a culture of Pseudomonas, which was continuously passed through the porous product until bioactive bacteria growth was evident on the porous particles. The porous particles can be used for the degradation of aromatic compounds such as phenol.

While this invention has been described with respect to various specific examples and embodiments, it is to be understood that the invention is not limited thereto and that it can be variously practiced within the scope of the following claims.

## Claims

1. A process for reducing the mean particle size of resilient porous organic polymer particles having open cell pores comprising (1) forming an aqueous particle slurry comprising water and said organic polymer particles, said water being present in at least a part of the internal pores of said particles and external to said particles, (2) subjecting the aqueous slurry to a cutting action by contact with a plurality of cutting surfaces to reduce the mean particle size of the particles and (3) recovering particles of reduced mean particle size.

2. A process according to claim 1, wherein the open cell pores represent at least 50% of the volume of the particle and a surface modifier is present in the aqueous slurry.

3. A process according to claim 1 or 2 wherein the open cell mean pore diameter is from 0.075 µm to 10 µm.

4. A process according to any one of the preceding claims wherein the reduced mean particle size is less than 100 µm.

5. A process according to any one of the preceding claims wherein the cutting action is rotating cutting action.

6. A process according to any one of the preceding claims wherein the organic polymer particles are selected from the group consisting of polypropylene, polyethylene, nylon and mixtures thereof.

7. A porous resilient organic polymer product comprising organic polymer particles having open cell pores and internal surfaces which represent at least 50% of the volume of the pores particles and having a non-spherical geometry, said particles being preparable by the process according to any one of the preceding claims.

8. A product according to claim 7 wherein the open cell pores comprise a functional agent.

9. A product according to claim 7 or 8 wherein the functional agent is one or more agents suitable for use in polymer products.

10. A product according to claim 7 or 8 wherein the functional agent is bioactive.

11. A product according to any one of claims 7 to 10 wherein the organic polymer comprises polypropylene.
